# EUROPÄISCHE PATENTSCHRIFT

(11) **EP 2 533 088 B1**
(45) Veröffentlichungstag und Bekanntmachung des Hinweises auf die Patenterteilung: **12.11.2014**
(21) Anmeldenummer: 12003902.9
(22) Anmeldetag: 18.05.2012
(51) Int. Cl.: G02B 6/44, G08B 13/08, H01H 13/18

(54) **Überwachungssystem für Glasfaser-Netzverteiler**
Monitoring system for glass fibre network distributor
Système de surveillance pour distributeur réseau en fibre de verre

(30) Priorität: 10.06.2011 DE 102011103935
(43) Veröffentlichungstag der Anmeldung: 12.12.2012
(73) Patentinhaber: Langmatz GmbH, 82467 Garmisch-Partenkirchen (DE)
(72) Erfinder: Wulf, Stephan, 82467 Garmisch-Partenkirchen (DE); Resch, Hans-Jörg, 82491 Grainau (DE); Emert, Anton Ludwig, 82469 Oberau (DE)
(74) Vertreter: Flosdorff, Jürgen

(56) Entgegenhaltungen:
- CN-C- 100 381 845
- GB-A- 2 431 919
- JP-A- 8 054 551
- JP-A- 2001 296 111
- US-A1- 2002 186 131

## Beschreibung

Die Erfindung betrifft ein Überwachungssystem für den Schließzustand der Tür oder des Deckels eines Gehäuses eines Glasfaser-Netzverteilers gemäß dem Oberbegriff des Patentanspruchs 1.

Bei dem Glasfaser-Netzverteiler kann es sich um einen Schrank handeln, der oberirdisch aufgestellt und mit einer Tür versehen ist, oder um einen unterirdischen Schacht, der über einen Schachtdeckel zugänglich ist. In dem Glasfaser-Netzverteiler befinden sich nur Glasfaser-Kabel, die in dem Netzverteiler gespleißt und dann den einzelnen Verbrauchern, d.h. Gebäuden, zugeführt werden. In den Glasfaser-Netzverteilern werden typischerweise keine Kupferkabel geführt, durch die Strom zuführbar ist. Von einer Zentralstelle (central office) werden hochporige Glasfaserkabel in den Netzverteiler geführt, dort aufgeteilt und über z.B. Micropipes zu einzelnen Gebäuden geführt. Diese Glasfaserkabel dienen der Übertragung von Telekommunikationssignalen.

Es ist wichtig, bei derartigen Glasfaser-Netzverteilern ständig überprüfen zu können, ob deren Tür oder Schachtdeckel ordnungsgemäß geschlossen ist oder von Unbefugten geöffnet wurde, beispielsweise durch Vandalismus. In diesem Fall muss unverzüglich ein Alarm des Netzverteilers an eine zentrale Überwachung abgesetzt werden.

JP 2001 296 111 A offenbart ein in der Straße verlegtes optisches Kabel mit zugehörigen Kabelschächten, wobei die Abdeckungen dieser Kabelschächte mit Hilfe einer optischen Überwachungsvorrichtung gesichert sind. Dabei sind mehrere optische Kabel parallel angeordnet, wobei eines dieser Kabel mit der zentralen Überwachungsvorrichtung sowie den Sensoreinheiten verbunden ist. Die Überwachungsvorrichtung enthält eine von den Kabelschächten getrennte zentrale Steuer-, Mess- und Überwachungseinheit, die Mittel zum Aussenden und Empfangen von Lichtimpulsen durch das optische Kabel und deren Auswertung aufweist, sowie eine in jedem Schacht angeordnete Spanneinrichtung in Form einer metallischen Feder und ein Betätigungsglied, das an dem Deckel des Kabelschachtes anliegt, um dessen Schließzustand zu erfassen. Die Spanneinrichtung ist bei geschlossenem Deckel von dem optischen Kabel beabstandet und drückt bei geöffnetem Deckel seitlich gegen das optische Kabel, so dass dieses gebogen wird. Dies hat zur Folge, dass die durch das optische Kabel ausgesandten Lichtimpulse in Abhängigkeit von dessen erzwungenen Biegung modifiziert zurück geschickt werden.

Die chinesische Patentanmeldung 100 381 845 C offenbart eine Überwachungseinheit, bei der ein elastischer Ring die Spanneinrichtung bildet, an dem zwei Stränge des optischen Kabels diametral gegenüberliegend befestigt sind. In Abhängigkeit von dem Schließzustand einer Tür wird der elastische Ring seitlich zu einer Ellipse zusammen gedrückt, wodurch das optische Kabel gebogen wird.

Der vorliegenden Erfindung liegt die Aufgabe zugrunde, ein Überwachungssystem für den Schließzustand der Tür oder des Deckels eines Gehäuses oder Schachtes eines Glasfaser-Netzverteilers anzugeben, ohne dass hierzu (der nicht zu Verfügung stehende) Strom als Energiequelle herangezogen wird.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass eine von dem Gehäuse des Glasfaser-Netzverteilers räumlich getrennte, entfernte Steuer-, Mess- und Überwachungseinheit über einen nicht für die Telekommunikation genutzten Glasfaserleiter bzw. -kabel mit einer Spanneinrichtung verbunden ist, die in dem Gehäuse des Glasfaser-Netzverteilers bzw. in dem Schacht untergebracht ist. Die Erfindung macht davon Gebrauch, dass ein Glasfaser-Leiter bevorzugt durch Laser mit einem Gitter oder dergleichen optisch wirkenden Markierung versehen werden kann und dass durch den Glasfaser-Leiter ausgesandte Lichtimpulse in veränderter Form zurück geschickt werden, wenn der Glasfaser-Leiter durch Aufbringen einer Kraft gedehnt wird.

Um diesen Effekt zu nutzen, ist die Spanneinrichtung in dem Gehäuse des Glasfaser-Netzverteilers mit Mitteln versehen, die den Glasfaser-Leiter dehnen oder entlasten, d.h. frei geben, je nachdem ob die Tür bzw. der Deckel des Gehäuses geöffnet oder geschlossen ist.

Die zentrale Steuer-, Mess- und Überwachungseinheit hat Mittel zum Aussenden von Lichtimpulsen durch den für das Überwachungssystem angeordneten Glasfaser-Leiter und zum Empfangen der zurück kehrenden Lichtimpulse und zu deren Auswertung, wozu die Steuer-, Mess- und Überwachungseinheit mit einem Computer versehen ist.

Die Ausbildung ist vorzugsweise so getroffen, dass der Glasfaser-Leiter bei geschlossener Tür bzw. geschlossenem Deckel spannungslos, d.h. ungedehnt ist. Wird die Tür/der Deckel geöffnet, wird der Glasfaser-Leiter gespannt und damit gedehnt, was durch die Veränderung der zurückkehrenden Lichtimpulse erfasst wird.

Eine geöffnete Tür bzw. Deckel bedeutet allerdings noch nicht, dass das Gehäuse von einem Unbefugten geöffnet worden ist. Ein Monteur, der Arbeiten in dem Glasfaser-Netzverteiler auszuführen hat, könnte dies grundsätzlich der Zentrale z.B. durch ein Mobiltelefon mitteilen, um einen Fehlalarm zu vermeiden. Da eine solche Vorgehensweise jedoch nicht zuverlässig funktioniert, wird mit großem Vorteil ferner vorgeschlagen, dass ein dem Monteur zugeordneter optischer Schlüssel mit dem Glasfaser-Leiter verbindbar ist, der Mittel aufweist, um zugehörige Lichtimpulse durch den Glasfaser-Leiter zu der Steuer-, Mess- und Überwachungseinheit zu schicken, die auf diese Weise die Berechtigung zum Öffnen der Tür oder des Deckels überprüft. Erst dann, wenn die Zentrale die den geöffneten Zustand der Tür bzw. des Deckels anzeigenden Lichtimpulse ohne zugehörige Lichtimpulse des optischen Schlüssels eines Monteurs empfängt, steht für die Zentrale fest, dass ein umgehend zu behebender Schadensfall eingetreten ist. In diesem Fall gibt der Computer ein Alarmsignal ab.

Die Steuer-, Mess- und Überwachungseinheit kann eine größere Anzahl, beispielsweise 40 bis 50 Glasfaser-Kabel und damit Glasfaser-Netzverteiler überwachen. Die Lichtimpulse der Glasfaser-Kabel sind dabei natürlich verschieden, damit die rücklaufenden Wellenlängen den jeweiligen Netzverteilern zugeordnet werden können.

Die Erfindung sieht ferner vor, dass die Spanneinheit ein Gehäuse aufweist, in dem sich ein Befestigungselement für den Glasfaser-Leiter befindet, das vorzugsweise als Sitz für eine Druckfeder dient, die sich am anderen Ende an dem Gehäuse abstützt. Wenn das Befestigungselement frei gegeben ist, wird es von der Druckfeder so beaufschlagt, dass der Glasfaser-Leiter gespannt und damit gedehnt wird.

In dem Gehäuse ist außerdem ein schwenkbarer Hebel angeordnet, der von dem Betätigungsglied der Spanneinrichtung bei geschlossener Tür bzw. Deckel derart gegen das Befestigungselement gedrückt wird, dass die Feder komprimiert und damit der Glasfaser-Leiter entlastet bzw. ungedehnt ist. Der Hebel hat vorzugsweise eine etwa rechtwinklige Form, wobei der in der Einbaulage untere Hebelarm gegen das Befestigungselement drücken kann, während der davon abgewickelte, andere Arm gabelförmig endet. In diese Gabel greift nach einem weiteren Vorschlag der abgewinkelte Endabschnitt einer Stange ein, die an einem seitlich an dem Gehäuse, d.h. etwa rechtwinklig zu dem Glasfaser-Leiter angeordneten, verschieblich gehaltenen Druckknopf befestigt ist. Dieser Druckknopf ist in einem zugehörigen Gehäuseteil von einer Druckfeder so vorgespannt, dass er aus dem Gehäuse - weg von dem Hebel - aus tritt, wenn er nicht durch ein Hindernis daran gehindert wird. Dieses Hindernis ist die Tür bzw. der Deckel, in dessen Nähe der Druckknopf (und damit das gesamte Gehäuse) positioniert ist.

Wenn demnach die Tür (bzw. der Deckel) geschlossen ist, wird der Druckknopf in seinen Gehäuseteil zurück gedrückt, wobei die damit verbundene Stange den Hebel so verschwenkt, dass dieser das Befestigungselement für den Glasfaser-Leiter gegen die Kraft der anliegenden Druckfeder so zurück drückt, dass der Glasfaser-Leiter ungedehnt (oder gering gedehnt) ist. Wird die Tür (Deckel) hingegen geöffnet, ist der Druckknopf frei gegeben und zieht dabei den Hebel von dem Befestigungselement des Glasfaser-Leiters zurück, so dass dieser durch die Kraft seiner Feder ein wenig bewegt wird und damit den Glasfaser-Leiter spannt und dehnt.

Weiter wird vorgeschlagen, dass außerhalb des Gehäuses der Spanneinrichtung für den optischen Schlüssel eine optische Schnittstelle angeordnet ist, so dass der optische Schlüssel seine zugehörigen Lichtimpulse entweder - wie dies bevorzugt ist - über den bis zur Schnittstelle weiter geführten Glasfaser-Leiter oder über einen zusätzlichen Glasfaser-Leiter an die Zentrale senden kann.

Das erfindungsgemäße Überwachungssystem zeigt somit zuverlässig an, wenn die Tür oder der Deckel eines Netzverteilers geöffnet ist, und gibt in der besonders bevorzugten Ausführungsform mit dem optischen Schlüssel auch darüber Auskunft, ob das Öffnen befugt oder unbefugt erfolgte.

Eine Ausführungsform der erfindungsgemäßen Spanneinrichtung wird nachfolgend mit Bezug auf die Zeichnungen näher beschrieben. Dabei zeigen:
- Figur 1: die Spanneinrichtung bei geschlossener Tür bzw. Deckel;
- Figur 2: die Spanneinrichtung bei geöffneter Tür bzw. Deckel und
- Figur 3: die Spanneinrichtung in dem Zustand der Figur 2 mit angesetztem optischen Schlüssel.

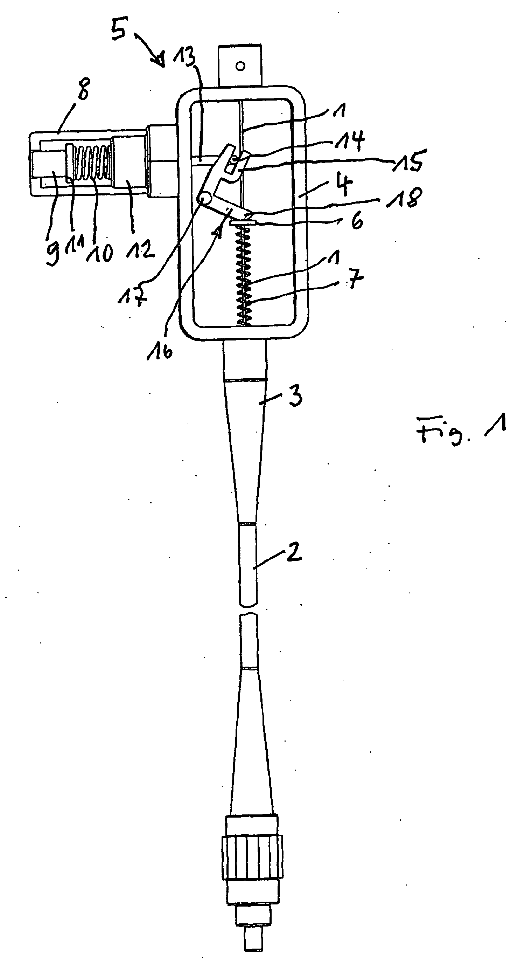

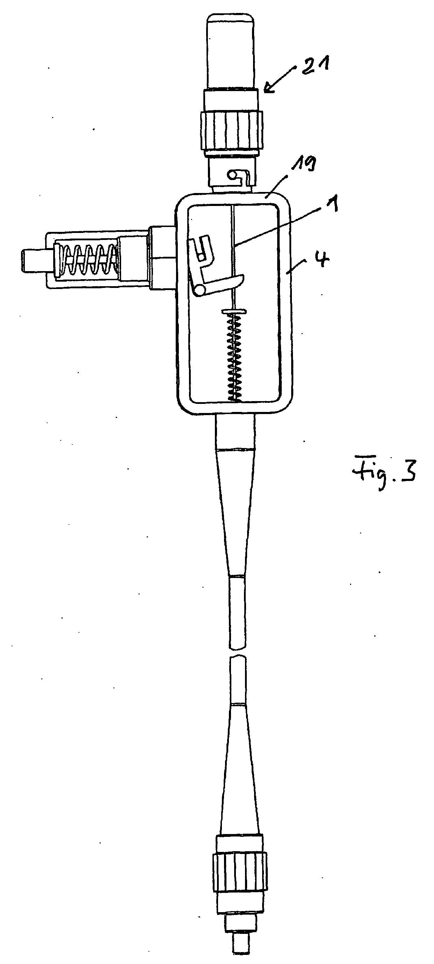

Die Figuren 1 bis 3 zeigen auf rein schematische Weise eine Ausführungsform einer Spanneinrichtung für einen Glasfaser-Leiter 1, der in einem hohlen Röhrchen 2 mit einem Anschluss-Stück 3 in das Gehäuse 4 der Spanneinrichtung 5 eingeführt ist. An dem Glasfaser-Leiter 1 ist innerhalb des Gehäuses 4 ein Befestigungselement 6 fest angebracht, das als Federsitz für eine Schraubendruckfeder 7 dient, die sich anderen Ends an einer Innenwand des Gehäuses 4 abstützt. Diese Feder 7 spannt das Befestigungselement 6 und damit den Glasfaser-Leiter 1 in der Darstellung der Figuren nach oben vor.

In einem seitlichen Gehäuseteil 8 befindet sich ein Druckknopf 9, der in der Darstellung der Figur 1 von einer nicht dargestellten Tür des Gehäuses eines Glasfaser-Netzverteilers in das Gehäuseteil 8 hineingedrückt ist, gegen die Kraft einer Schraubenfeder 10, die sich an einem Bund 11 des Druckknopfs 9 und an einem gegenüber liegenden Federsitz 12 abstützt.

Die Feder 10 spannt den Druckknopf 9 zur Außenseite des Gehäuseteils 8 hin vor.

Mit dem Druckknopf 9 ist eine Stange 13 verbunden, deren Endabschnitt 14 abgewinkelt ist und in einen gabelförmigen Abschnitt 15 eines im wesentlichen rechtwinkligen Hebels 16 eingreift. Der Hebel 16 ist um ein zentrales Gelenk 17 schwenkbar und hat einen um etwa 90° abgewinkelten Arm 18, in dessen Schwenkbereich das Befestigungselement 6 liegt. Wenn der Druckknopf 9 von der nicht dargestellten Tür (oder Deckel) einwärts gedrückt und gehalten ist, drückt der Arm 18 des im Uhrzeigersinn gedrehten Hebels 16 gegen das Befestigungselement 6, wobei dieses gegen die Kraft der Feder 7 ein wenig nach unten gedrückt ist, so dass der Glasfaser-Leiter 1 ungespannt und damit ungedehnt ist.

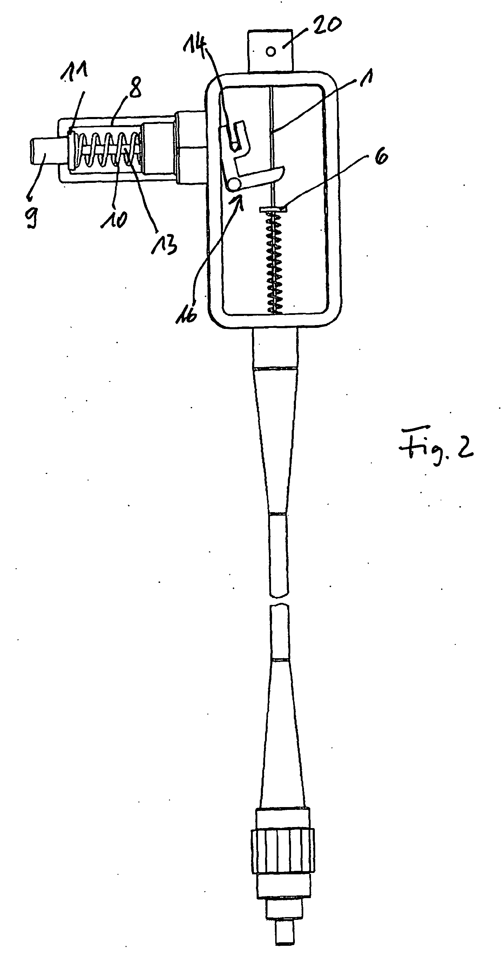

Figur 2 zeigt den Zustand der Spanneinrichtung bei geöffneter Tür bzw. Deckel, wobei der Druckknopf 9 durch Federkraft aus dem Gehäuseteil 8 austritt, bis der Bund 11 des Druckknopfs 9 an der Gehäusewand anliegt. Dabei wird auch die Stange 13 nach links gezogen, so dass der abgewinkelte Endabschnitt 14 den Hebel 16 von dem Befestigungselement 6 weg verschwenkt. Hierdurch wird das Befestigungselement 6 mit dem daran angebrachten Glasfaser-Leiter 1 nach oben gedrückt, wodurch der Glasfaser-Leiter 1 gespannt und damit gedehnt wird.

Der Glasfaser-Leiter 1 verläuft von dem Befestigungselement 6 weiter durch die obere Wand 19 des Gehäuses 4 hindurch und ist an der Außenseite des Gehäuses 4 mit einer optischen Schnittstelle 20 verbunden. Die optische Schnittstelle 20 ist dazu geeignet, dass ein optischer Schlüssel 21 angesetzt wird, der zugehörige Lichtimpulse durch den Glasfaser-Leiter 1 schicken kann.

Es liegt im Rahmen der Erfindung, dass die mechanische Spanneinrichtung so ausgebildet sein kann, dass der Glasfaser-Leiter bei geschlossener Tür gedehnt und bei geöffneter Tür ungedehnt oder weniger gedehnt ist.

## Patentansprüche

1. Überwachungssystem für den Schließzustand der Tür oder des Deckels eines Gehäuses eines Glasfaser-Netzverteilers,
enthaltend
eine von dem Gehäuse des Glasfaser-Netzverteilers räumlich getrennte zentrale Steuer-, Mess- und Überwachungseinheit, die Mittel zum Aussenden und Empfangen von Lichtimpulsen und deren Auswertung aufweist,
eine in dem Gehäuse angeordnete Spanneinrichtung (5),
und einen nicht für die Telekommunikation genutzten Glasfaser-Leiter (1), der mit der Steuer- und Überwachungseinheit und der Spanneinrichtung (5) verbunden ist,
wobei die Spanneinrichtung (5) ein Betätigungsglied (9) aufweist, das den Schließzustand der Tür oder des Deckels erfasst und wobei der Glasfaser-Leiter (1) mit einem zugehörigen Gitter versehen ist,
durch das die von der Steuer-, Mess- und Überwachungseinheit durch den Glasfaser-Leiter (1) ausgesandten Lichtimpulse in Abhängigkeit von dessen Dehnung modifiziert zurück geschickt werden,
**dadurch gekennzeichnet,**
**dass** die Spanneinrichtung (5) ein Gehäuse (4) aufweist, in dem ein Befestigungselement (6) für den Glasfaser-Leiter (1) angeordnet ist, das von einer Feder (7) vorgespannt ist, um den Glasfaser-Leiter (1) in axialer Richtung zu dehnen, und
**dass** in dem Gehäuse (4) ferner ein schwenkbarer Hebel (16) angeordnet ist, der von dem Betätigungsglied (9) bei geschlossener Tür bzw. Deckel derart gegen das Befestigungselement (6) gedrückt wird, dass die Feder (7) komprimiert und der Glasfaser-Leiter (1) entlastet ist.

2. Überwachungssystem nach Anspruch 1,
**dadurch gekennzeichnet,**
**dass** ferner ein optischer Schlüssel (21) mit dem Glasfaser-Leiter (1) verbindbar ist, um zugehörige Lichtimpulse von der Steuer-, Mess- und Überwachungseinheit zu erkennen, die damit die Berechtigung zum Öffnen der Tür oder des Deckels überprüft.

3. Überwachungssystem nach Anspruch 1,
**dadurch gekennzeichnet,**
**dass** das Betätigungsglied (9) ein Druckknopf ist, der von der geschlossenen Tür bzw. Deckel gegen die Kraft einer Feder (10) zurückgedrückt wird und mit einem Gestänge (13,14) den Hebel (16) gegen das Befestigungselement (6) drückt.

4. Überwachungssystem nach einem der Ansprüche 1 bis 3,
**dadurch gekennzeichnet,**
**dass** außerhalb des Gehäuses für den optischen Schlüssel (21) eine optische Schnittstelle (20) angeordnet ist, die über den Glasfaser-Leiter (1) oder einen weiteren Glasfaser-Leiter mit der Steuer-, Mess- und Überwachungseinheit verbindbar ist.

5. Überwachungssystem nach einem der Ansprüche 1 bis 4,
**dadurch gekennzeichnet,**
**dass** die Steuer-, Mess- und Überwachungseinheit Mittel zur Erzeugung eines Alarmsignals aufweist, wenn sie den Öffnungszustand anzeigende Lichtimpulse ohne Lichtimpulse eines berechtigten optischen Schlüssel empfängt.

6. Überwachungssystem nach einem der Ansprüche 1 bis 5,
**dadurch gekennzeichnet,**
**dass** das Gehäuse des Glasfaser-Netzverteilers mit einem eigenen Glasfaser-Leiter mit der zentralen Steuer-, Mess- und Überwachungseinheit verbunden ist.

7. Überwachungssystem nach einem der Ansprüche 1 bis 5,
**dadurch gekennzeichnet,**
**dass** mehrere hintereinander liegenden (kaskadierte) Gehäuse mit einem gemeinsamen Glasfaser-Leiter mit der zentralen Steuer-, Mess- und Überwachungseinheit verbunden sind.

## Claims

1. A monitoring system for the closure state of the door or the cover of a housing for a glass fibre network distributor including a central control, measurement and monitoring unit, which is spatially separated from the housing of the glass fibre network distributor and includes means for transmitting and receiving light impulses and the analysis thereof, a tensioning device (5) arranged in the housing, a glass fibre guide (1), which is not used for telecommunication and is connected to the control and monitoring unit and to the tensioning device (5), wherein the tensioning device (5) includes an actuating element (9), which detects the closure state of the door or the cover, and wherein the glass fibre guide (1) is provided with an associated grid, by which the light impulses emitted from the control, measurement and monitoring unit through the glass fibre guide (1) are sent back modified in dependence on its expansion, **characterised in that** the tensioning device (5) includes a housing (4), in which is arranged a fastening element (6) for the glass fibre guide (1), which is prestressed by a spring (7) in order to stretch the glass fibre guide (1) in the axial direction and that further arranged in the housing (4) there is a pivotable lever (16), which is pressed by the actuating element (9), when the door or cover is closed, against the fastening element (6) such that the spring (7) is compressed and the glass fibre guide (1) is unloaded.

2. A monitoring system as claimed in claim 1, **characterised in that** an optical key (21) is additionally connectable to the glass fibre guide (1) in order to recognise associated light pulses from the control, measurement and monitoring unit, which thus checks the authorisation for the opening of the door or cover.

3. A monitoring system as claimed in claim 1, **characterised in that** the actuating element (9) is a push button, which is pressed back by the closed door or cover against the force of a spring (10) and presses the lever (16) against the actuating element (6) with a linkage (13, 14).

4. A monitoring system as claimed in one of claims 1 to 3, **characterised in that** arranged outside the housing for the optical key (21) there is an optical interface (20), which is connectable via the glass fibre guide (1) or a further glass fibre guide to the control, measurement and monitoring unit.

5. A monitoring system as claimed in one of claims 1 to 4, **characterised in that** the control, measurement and monitoring unit includes means for producing an alarm signal when it receives light pulses indicating the open state or light pulses of an authorised optical key.

6. A monitoring system as claimed in one of claims 1 to 5, **characterised in that** the housing of the glass fibre network distributor is connected to the central control, measurement and monitoring unit with its own glass fibre guide.

7. A monitoring system as claimed in one of claims 1 to 5, **characterised in that** a plurality of housings situated behind one another (cascaded) are connected to the central control, measurement and monitoring unit with a common glass fibre guide.

## Revendications

1. Système de surveillance pour l'état de fermeture de la porte ou du couvercle d'un boîtier d'un distributeur réseau à fibre de verre,
contenant
une unité de commande, de mesure et de surveillance centrale, séparée physiquement du boîtier du distributeur réseau à fibre de verre, laquelle comprend des moyens pour l'émission et la réception d'impulsions de lumière et pour leur évaluation,
une unité de tension (5) disposée dans le boîtier,
et un conducteur en fibre de verre (1) non utilisé pour la télécommunication, qui est relié à l'unité de commande, de mesure et de surveillance et à l'unité de tension (5),
l'unité de tension (5) comprenant un organe d'actionnement (9) qui détecte l'état de fermeture de la porte ou du couvercle et le conducteur en fibre de verre (1) étant pourvu d'une grille associée par laquelle les impulsions de lumière émises par l'unité de commande, de mesure et de surveillance à travers le conducteur en fibre de verre (1) sont renvoyées en fonction de l'étirement dudit conducteur,
**caractérisé**
**en ce que** l'unité de tension (5) comprend un boîtier (4) dans lequel est disposé un élément de fixation (6) pour le conducteur en fibre de verre (1), lequel élément est pré-tendu par un ressort (7) afin d'étirer le conducteur en fibre de verre (1) dans la direction axiale, et
**en ce que** dans le boîtier (4) est disposé en plus un levier (16) pivotant qui, lorsque la porte ou le couvercle est fermé, est poussé par l'crgane d'actionnement (9) contre l'élément de fixation (6) de manière telle que le ressort (7) est comprimé et que le conducteur en fibre de verre (1) est délesté.

2. Système de surveillance selon la revendication 1,
**caractérisé**
**en ce que**, en plus, une clé optique (21) peut être reliée au conducteur en fibre de verre (1) afin de reconnaître des impulsions de lumière associées de l'unité de commande, de mesure et de surveillance qui vérifie ainsi l'autorisation d'ouvrir la porte ou le couvercle.

3. Système de surveillance selon la revendication 1,
**caractérisé**
**en ce que** l'organe d'actionnement (9) est un bouton-poussoir qui est repoussé par la porte ou le couvercle fermé contre la force d'un ressort (10) et appuie avec une tige (13, 14) le levier (16) contre l'élément de fixation (6).

4. Système de surveillance selon l'une quelconque des revendications 1 à 3,
**caractérisé**
**en ce que**, en dehors du boîtier, est disposée pour la clé optique (21) une interface optique (20) qui peut être reliée à l'unité de commande, de mesure et de surveillance par le conducteur en fibre de verre (1) ou par un autre conducteur en fibre de verre.

5. Système de surveillance selon l'une quelconque des revendications 1 à 4,
**caractérisé**
**en ce que** l'unité de commande, de mesure et de surveillance comprend des moyens servant à la génération d'un signal d'alarme lorsqu'elle reçoit des impulsions de lumière indiquant l'état d'ouverture sans les impulsions de lumière d'une clé optique autorisée.

6. Système de surveillance selon l'une quelconque des revendications précédentes 1 à 5,
**caractérisé**
**en ce que** le boîtier du distributeur réseau à fibre de verre est relié par son propre conducteur en fibre de verre à l'unité de commande, de mesure et de surveillance centrale.

7. Système de surveillance selon l'une quelconque des revendications 1 à 5,
**caractérisé**
**en ce que** plusieurs boîtiers placés les uns derrière les autres (mis en cascade) avec un conducteur en fibre de verre commun sont reliés à l'unité de commande, de mesure et de surveillance centrale.
